# EUROPÄISCHE PATENTSCHRIFT

(11) **EP 4 288 263 B1**
(45) Veröffentlichungstag und Bekanntmachung des Hinweises auf die Patenterteilung: **16.07.2025**
(21) Anmeldenummer: 22840672.4
(22) Anmeldetag: 20.12.2022
(51) Int. Cl.: B29C 51/08, B29L 31/00, B29C 43/00, D21J 7/00, D21J 3/10, C11D 17/00, E03D 9/03, E03D 9/02

(54) **BEHÄLTNIS FÜR EIN WC-KÖRBCHEN**
CONTAINER FOR A TOILET RIM CAGE
RÉCIPIENT POUR BLOC WC

(30) Priorität: 03.02.2022 DE 102022102549
(43) Veröffentlichungstag der Anmeldung: 13.12.2023
(73) Patentinhaber: Buck Industries GmbH, 71083 Herrenberg (DE)
(72) Erfinder: GLÖCKLER, Johannes, 89233 Neu-Ulm (DE); JAESCHKE, Carsten, 70794 Filderstadt (DE)
(74) Vertreter: Mammel und Maser Patentanwälte PartG mbB
(86) Internationale Anmeldenummer: PCT/EP2022/086885
(87) Internationale Veröffentlichungsnummer: WO 2023/147928

(56) Entgegenhaltungen:
- WO-A1-2019/170724
- WO-A1-2020/125937
- DE-C1- 19 915 322

## Beschreibung

Die vorliegende Erfindung betrifft ein umweltfreundliches Behältnis mit Öffnungen zur Bevorratung von Reinigungsmitteln für WC-Körbchen, das Herstellungsverfahren und ein solches Behältnis für WC-Körbchen mit Reinigungsmittel und die Verpackung.

Ein Großteil der bekannten stückförmigen Reinigungsmittel sind so genannte "Rimblocks", die in körbchen- oder käfigartigen Behältnissen mit einer hakenförmigen Hängevorrichtung, den sogenannten WC-Körbchen, am Rand der Toilette befestigt werden. Die Behältnisse weisen Eintritts- und Austrittsöffnungen für das Spülwasser auf. Das in dem Behältnis befindliche Mittel wird bei jedem Spülvorgang von dem Spülwasser überströmt. Hierdurch wird bei jeder Spülung ein geringer Anteil des Reinigungsmittels unter Freisetzung von Tensiden, Duftstoffen etc. aufgelöst, wodurch dann die gewünschte Reinigung des Toilettenbeckens und des Toilettensumpfs und die gewünschte Beduftung erzielt werden.

Im Allgemeinen weisen die Reinigungsmittel Duftstoffe auf und sind für ein optisch ansprechendes Aussehen eingefärbt.

Im Stand der Technik gibt es eine Vielzahl unterschiedlicher WC-Körbchen. Viele WC-Körbchen weisen zwei Schalenhälften mit Eintritts- und Austrittsöffnungen auf, die mit einem Scharnier miteinander verbunden sind, so dass sich das WC-Körbchen öffnen und schließen lässt und das Körbchen nach Verbrauch des Mittels wieder gefüllt werden kann.

Weiterhin gibt es wiederbefüllbare Körbchen, die eine nach oben oder zur Seite offene Öffnung aufweisen, durch die nach Verbrauch neue stückförmige WC-Reinigungsmittel in das Körbchen hineingeschoben werden können.

Weiterhin gibt es Einmalkörbchen, die nach Verbrauch des Mittels weggeworfen werden. Bei den Einmalkörbchen gibt es wiederum WC-Körbchen, bei deren Herstellung das stückförmige Reinigungsmittel während des Herstellens in das Körbchen eingeschlossen wird. Ein solches Körbchen wird als Ganzes nach Entleerung entsorgt.

In einer Variante von solchen Einmalkörbchen sind die Behältnisse schalenförmig, und das Reinigungsmittel wird während des Herstellens beispielsweise als Schmelze in das schalenförmige Behältnis gegossen und erstarrt dann. Nach der Entleerung werden das leere Behältnis und ggfs. auch die daran befindliche Hängevorrichtung weggeworfen.

Die WC-Körbchen werden zusammen mit den Reinigungsmitteln im Allgemeinen in einer Blisterverpackung angeboten. Die Blisterverpackung dient nicht nur zur Befestigung des WC-Körbchens und des Reinigungsmittels an dem Blisterkarton, sondern auch dazu, ein Verdampfen der Duftstoffe aus dem Reinigungsmittel zu verhindern.

Häufig werden WC-Körbchen, die im Allgemeinen Öffnungen zum Ein- und Austritt des Spülwassers aufweisen, mittels Spritzguss hergestellt. Die Spritzgusskörbchen sind formbeständig und optisch ansprechend und lassen sich in einer Vielzahl von Formen herstellen. Allerdings ist das Herstellungsverfahren recht aufwendig, zur Herstellung eines solchen Körbchens wird relativ viel Kunststoff eingesetzt und zudem muss bei Veränderung der Form des Körbchens jeweils eine neue Spritzgussform hergestellt werden, was teuer ist.

Aus der EP 3 121 342 A1 ist ein Behältnis für ein WC-Reinigungsmittel bekannt, das zwei mit einem Scharnier verbundene Schalenhälften aufweist, wobei eine Schalenhälfte eine oder mehrere Halbschalen zur Aufnahme von Reinigungsmittel und keine Durchbrechungen aufweist und die andere Schalenhälfte auf der den Halbschalen gegenüberliegenden Seite Vertiefungen mit Durchbrechungen aufweist, durch die das Spülwasser an die Oberfläche des in den Näpfen befindlichen Mittels gelangen und dieses auflösen kann. Die Durchbrechungen befinden sich in einer ebenen Fläche der Vertiefung in der anderen Schalenhälfte.

Im geschlossenen Zustand bildet jeweils eine Halbschale und die Vertiefung mit der Durchbrechung eine Kammer zur Aufnahme des Reinigungsmittels. Dieses Behältnis wird am Rand der WC-Schüssel verklemmt.

Durch die Ausgestaltung des Behälters lässt sich dieses durch Thermoformen und Stanzen aus einer Folie herstellen, so dass solche Behältnisse einfach und mit wenig Materialaufwand und somit kostengünstig herstellbar sind.

Nachdem das Reinigungsmittel in diesem Behälter in der geschlossenen Halbschale aufgenommen ist und das Wasser an das Reinigungsmittel nur durch den Durchtritt des Spülwassers durch die Durchbrechungen in den Vertiefungen auf der gegenüberliegenden Seite gelangt, spülen sich Reinigungsmittel in solch einem Behältnis nicht hinreichend gut ab.

Aufgrund der Ausgestaltung kann es zudem dazu kommen, dass Spülwasser in dem Behälter verbleibt und sich der Wirkstoff somit nicht richtig entfalten kann.

Die EP 3 214 232 A1 lehrt ebenfalls ein WC-Körbchen, das sich durch Thermoformen und Stanzen herstellen lässt. Um den Spülwasseraustritt zu gewährleisten, weist dieses WC-Körbchen in der Betriebsposition im unteren Bereich zwischen der ersten und der zweiten Schalenhälfte einen Spalt auf, durch den das Spülwasser aus dem Körbchen austreten kann.

Aus der WO 2018/009336 A1 ist ein WC-Körbchen bekannt, das eine Hängevorrichtung mit einem lösbaren Rastelement und eine blisterartige Kassette mit einem korrespondierenden Rastelement aufweist, so dass die Kassette mit der Hängevorrichtung verbunden werden und die Kassette nach Entleerung von der Hängevorrichtung entfernt und durch eine neue Kassette ausgetauscht werden kann. Die Kassette weist eine Schale und eine Abdeckung auf, und in der Schale befindet sich das Reinigungsmittel, das in die Schale eingegossen sein kann. Zur Ingebrauchnahme wird die Abdeckung von der Schale entfernt und die Hängevorrichtung mit dem Reinigungsmittel in der Schale in die Toilettenschüssel gehängt. Die Schale ist bis auf die große Eintrittsöffnung geschlossen und wird durch Thermoformen hergestellt.

Dieses WC-Körbchen mit ersetzbarer Kassette ist hygienisch und umweltfreundlich, da es die Wiederverwendung der Hängevorrichtung ermöglicht und das Behältnis für das Reinigungsmittel, das in die Toilettenschüssel hineinreicht und das unter Umständen verschmutzt sein könnte, weggeworfen wird. Zur Umweltfreundlichkeit und zu geringen Herstellungskosten trägt auch bei, dass die Schale durch Thermoformen aus einer Folie hergestellt wird, was kostengünstig ist und wodurch - verglichen mit dem Spritzguss eine erhebliche Menge an Kunststoff eingespart werden kann.

Nachteilig ist jedoch auch bei diesem WC-Körbchen, dass sich das Mittel nicht hinreichend gut abspült.

Aus der EP 3 263 785A1 ist ein Verfahren zum Befüllen eines Sanitärmittels in einen Behälter bekannt. Zunächst wird ein Behälterkörper, der Schlitze aufweist und zur Aufnahme von gelförmigen Sanitärmitteln dient, bereitgestellt. Anschließend wird ein wasserlösliches Material über die Schlitze in den Behälter gelegt, um die Schlitze abzudecken. In den Behälter wird nun das gelförmige Sanitärmittel gegossen, das dort erstarrt. Der Behälter mit dem eingegossenen Gel wird nun an der Hängevorrichtung befestigt und in die Toilettenschüssel gehängt. Beim ersten Spülen löst sich das in den Schlitzen befindliche wasserlösliche Material auf und Wasser gelangt durch die Schlitze zu dem gelförmigen Reinigungsmittel.

Die Herstellung des Behälters erfolgt mit Spritzguss.

Dieses Verfahren ermöglicht es, in Schalen mit Schlitzen gegossene Gele bereitzustellen, wobei sich die Gele im Gebrauch infolge der Schlitze gut abspülen. Die Gelschalen können nach Entleerung von der Hängevorrichtung entfernt und weggeworfen und durch eine neue gefüllte Gelschale ersetzt werden.

Aus der WO 2016/040341A1 ist ein Verfahren zur Herstellung eines Behältnisses mit wenigstens einer Öffnung zur Bevorratung von Reinigungsmittel für ein WC-Körbchen bekannt, wobei eine Polymerfolie bereitgestellt wird und in die Polymerfolie wenigstens eine Öffnung gestanzt wird und die wenigstens eine Öffnung mit einem im Wesentlichen gasdichten oder wieder entfernbaren Verschlussmaterial verschlossen wird.

Diese Verfahren sind allerdings aufwändig und kostenintensiv.

Aus der EP 3 592 907 A1 ist ein Behältnis für ein WC-Körbchen zur Bevorratung von Reinigungsmitteln bekannt, das aus einer Polymerfolie mit Öffnungen hergestellt ist, wobei die Öffnungen in dem Behältnis mit einem im Wesentlichen gasdichten und wiederentfernbaren Verschlussmaterial verschlossen sind. Als gasdichtes und wiederentfernbares Verschlussmaterial kann ein wasserlösliches Polymermaterial eingesetzt werden. Beim ersten Überspülen des Körbchens in der Toilettenschüssel fließt Wasser über das wasserlösliche Material und löst dieses auf, so dass die Öffnungen zugänglich werden und Wasser in den Innenraum des Behältnisses gelangt und das dort befindliche Reinigungsmittel nach und nach auflösen kann.

Das Behältnis lässt sich kostengünstig herstellen und ist gleichzeitig eine im Wesentlichen gasdichte Produktverpackung, so dass eine zusätzliche Verpackung entfallen kann. Dies ist umweltfreundlich.

Die DE 19 25 853 lehrt einen Behälter für einen in Wasser dispergierbaren Zusatzstoff für den Wasserkasten einer Toilette, bei dem der Übergang von Zusatzstoff aus dem Behälter in das im Wasserkasten stehende Wasser praktisch vermieden wird und ein Ausströmen von Zusatzstoff in das Wasser des Wasserkastens nur gegen Ende der Entleerung des Wasserkastens erfolgt.

Die WO 2020/125937 A1 lehrt einen Dispenser zur Abgabe eines Wirkstoffs, zur Belüftung von Räumen, Geschirrsspülmaschinen, Kühlschränken, zum Maskieren oder Neutralisieren eines unangenehmen Geruchs, zur Textilpflege, zur Abgabe von Insektenschutzmitteln, zur Schädlingsbekämpfung, zur Freisetzung von Bioziden, als WC-Duftspüler oder zur Freisetzung von Aromastoffen, der aus Polymermaterialien, Verbundstoffen, Cellulosematerialien oder Metallfolien hergestellt sein kann.

Die DE 199 15 322 C1 betrifft ein nachfüllbares WC-Körbchen für Flüssigreiniger, das neben einem Trägerelement und einem Füllraum auch einen porösen Körper zur Verdunstung der Flüssigkeit und zur Geruchsverbesserung umfasst.

Die Aufgabe der vorliegenden Erfindung besteht darin, die Umweltfreundlichkeit der bislang bekannten Behältnisse für Toilettenreinigungsmittel weiter zu verbessern.

Diese Aufgabe wird durch die Merkmale des Anspruchs 1, 10 und 15 gelöst.

Erstaunlicherweise wurde festgestellt, dass solche Behältnisse für WC-Reinigungsmittel aus einem flächigen, cellulosehaltigen Fasermaterial pflanzlicher Herkunft wie insbesondere Papier oder Pappe herstellbar sind. Grundsätzlich können auch "Trendpapiere" wie Gras- oder Hanfpapiere im Rahmen der vorliegenden Erfindung eingesetzt werden. Nach DIN 6730 ist unter Papier ein Fasermaterial mit einer flächenbezogenen Masse von 7 g/m² bis 225 g/m² und unter Pappe ein Fasermaterial mit einer flächenbezogenen Masse mit mehr als 225 g/m² zu verstehen.

Gemäß dem erfindungsgemäßen Verfahren wird zunächst in ein flächiges, cellulosehaltiges Fasermaterial, das eben ist, wenigstens eine Öffnung eingebracht und vorzugsweise eingestanzt, und anschließend wird das gestanzte flächige, cellulosehaltige Fasermaterial mittels Tiefziehen, Kaltverformung, Kaltverpressung oder Hydroforming in die gewünschte Behältnisform gebracht. Ein solches Verfahren ist einfach und kostengünstig zu bewerkstelligen. Durch die Öffnung(en) soll bei dem fertiggestellten Behältnis später im Gebrauch der Wasserdurchtritt in den Behältnisinnenraum zu dem aufzulösenden Reinigungsmittel und der Austritt der Reinigungsmittellösung erfolgen.

Dadurch, dass das Behältnis aus einem flächigen cellulosehaltigen Fasermaterial wie Papier oder Pappe ist, kann das entleerte Behältnis in den Altpapierbehälter gegeben und insbesondere als Altpapier recycelt werden. Eine Entsorgung in den Abfall, wie bei den bisher bekannten Kunststoffkörbchen, oder ein aufwändiges und ungenügendes Recyceln von Wertstoffgemischen in der gelben Tonne wird hierdurch vermieden. Zudem kann ein solches Papierkörbchen bis zu acht Mal recycelt werden.

Erstaunlicherweise behalten die Behältnisse aus flächigem cellulosehaltigen Fasermaterial bei vielfachem Überspülen mit Wasser die erforderliche Stabilität bei, sie nehmen zwar beim Überspülen Wasser auf, das jedoch anschließend wieder abtrocknet. Noch erstaunlicher ist, dass selbst die mit WC-Reinigungsmittel befüllten Behältnisse aus flächigem cellulosehaltigen Fasermaterial ihre Stabilität beibehalten, nicht reißen oder sich zersetzen, obwohl sie beim Überspülen nicht nur Feuchtigkeit, sondern auch fortwährend der Tensidlösung ausgesetzt sind.

Versuche im Hause der Anmelderin ergaben, dass mit Reinigungsmitteln (Masse 50 g) befüllte Papierbehältnisse selbst nach 150 Spülungen ihre Stabilität beibehalten, ansprechend aussehen und sich nicht auflösten oder zersetzten.

Das erfindungsgemäße Behältnis aus flächigem cellulosehaltigen Fasermaterial für WC-Reinigungsmittel lässt sich kostengünstig und umweltfreundlich durch Umformen, insbesondere Tiefziehen, Kaltverformung (Pressverformung), Kaltverpressung oder Hydroforming herstellen. Das Fasermaterial kann bedruckbar oder lackierbar sein. Des Weiteren kann das Fasermaterial auch mit einer biologisch abbaubaren Beschichtung versehen sein.

Bei dem erfindungsgemäßen Herstellungsverfahren werden in ein umform-und insbesondere tiefziehbares, kaltverformbares, kaltpressbares oder hydroformbares flächiges cellulosehaltiges Fasermaterialeine oder mehrere Öffnungen gestanzt, die dem späteren Zutritt bzw. Austritt des Wassers in das bzw. aus dem Behältnis dienen, und das flächige cellulosehaltige Fasermaterialwird dann in dem jeweiligen Verformungsprozess in den gewünschten Hohlkörper, nämlich die gewünschte dreidimensionale Behältnisform, die vorzugsweise schalenförmig ist, gebracht.

In der Tiefzieh-Formstation kann das flächige cellulosehaltige Fasermaterial mithilfe eines Heizsystems je nach Anforderungsprofil erwärmt und anschließend mittels eines Tiefziehwerkzeuges (Stempel) und zusätzlich durch Vakuum und/oder Druckluft verformt werden. Anschließend kann das Behältnis aus flächigem cellulosehaltigen Fasermaterial dann mit dem WC-Reinigungsmittel befüllt werden. Das Umformen kann auch in einer Kaltverformungs-, Kaltverpressungs- oder Hydroforming-Station durchgeführt werden.

Das Behältnis mit dem eingegossenen oder auf sonstige Weise gefüllten Reinigungsmittel kann dann mit einem Behältnisdeckel verschlossen werden, wobei der Behältnisdeckel eben oder ebenfalls halbschalenförmig sein kann.

Die erfindungsgemäß eingesetzten flächigen cellulosehaltigen Fasermaterialien sollten tiefziehbar, das heißt umformbar und recycelbar sein. Die Tiefziehbarkeit von flächigen cellulosehaltigen Fasermaterialien kann beispielsweise dadurch erreicht werden, dass die Cellulose in den flächigen cellulosehaltigen Fasermaterialien über einen chemischen Prozess mit thermoplastischen Eigenschaften ausgestattet wird.

Unter Tiefziehen wird im Rahmen dieser Erfindung eine Zugdruckumformung in einen einseitig offenen Hohlkörper verstanden.

Damit Papier als Altpapier entsorgt werden darf, darf es maximal einen Anteil von 5% Fremdstoffen enthalten. Handelt es sich bei dem Fremdstoffanteil allerdings um nicht recycelbare Kunststofffasern, so müssen die Kunststofffasern (wie beispielsweise auch die transparenten Fenster von Briefumschlägen) aus dem Altpapier abgetrennt und entsorgt werden.

Um die Umweltfreundlichkeit des erfindungsgemäßen Papierbehältnisses weiter zu erhöhen, wird deshalb vorzugsweise ein tiefziehbares flächiges cellulosehaltiges Fasermaterial ohne Kunststofffasern eingesetzt. Vorzugsweise ist das flächige cellulosehaltige Fasermaterial zu wenigstens 95%, vorzugsweise wenigstens 98% und besonders bevorzugt zu 100% recycelbar und/oder wenigstens teilweise aus recycelten flächigen cellulosehaltigen Fasermaterialien, insbesondere Papier oder Pappe, hergestellt.

Das flächige cellulosehaltige Fasermaterial sollte eine gewisse Formstabilität aufweisen und Stabilität gegenüber mechanischer Belastung bei der Lagerung, dem Transport und der Anwendung geben. Zudem muss das flächige cellulosehaltige Fasermaterial eine gewisse Resistenz gegenüber äußeren Einflüssen wie Feuchtigkeit oder Chemikalien aufweisen.

In einer bevorzugten Variante werden nach dem zuvor beschriebenen Schritt des Stanzens der Öffnung(en) in das flächige cellulosehaltige Fasermaterial die gestanzten Öffnungen mit einem wiederentfernbaren und im Wesentlichen gasdichten Verschlussmaterial verschlossen, und der Verbund aus flächigem cellulosehaltigen Fasermaterial und dem im Wesentlichen gasdichten Verschlussmaterial wird dann in die gewünschte dreidimensionale Behältnisform, beispielsweis in Schalenform, umformt bzw. tiefgezogen.

Damit erhält man ein aus flächigem cellulosehaltigen Fasermaterial geformtes Behältnis mit Öffnungen, die mit dem wiederentfernbaren Verschlussmaterial abgedeckt sind. Hierdurch ist das Behältnis im Wesentlichen gasdicht.

In solch ein Behältnis, beispielsweise in Schalenform, kann nun beispielsweise heiße Gelmasse des Toilettenreinigungsmittels eingefüllt werden, die dann erkaltet, oder ein stückförmiges Reinigungsmittel eingelegt werden. Alternativ kann auch zunächst in das flächige cellulosehaltige Fasermaterial wenigstens eine Öffnung gestanzt, dann tiefgezogen und die Öffnungen anschließend verschlossen werden, beispielsweise durch ein wiederablösbares Etikett.

Als gasdichtes, wiederentfernbares Verschlussmaterial kann beispielsweise ein wasserlösliches Polymermaterial, aber auch ein selbstklebendes Etikett oder eine Aufreißlasche, aber auch ein nicht wasserlösliches Etikett beispielsweise aus Papier eingesetzt werden.

Als wasserlösliches Polymermaterial wird vorzugsweise wasserlösliche Polymerfolie eingesetzt, da sich diese sehr gut auf das Papier kaschieren lässt und sich somit auf einfache Weise ein Verbund bzw. ein Laminat aus Papier und wasserlöslicher Folien herstellen lässt, das dann tiefgezogen werden kann.

Als wasserlösliches Verschlussmaterial kann Polyvinylalkohol, Polysaccharid, Gelatine, Cellulosederivate im Allgemeinen wie beispielsweise Hydroxyethyl-, Methy- und Propylcellulose, Maltodextrine, etc. eingesetzt werden. Es können auch Verschlussmaterialien auf Basis nachwachsender Rohstoffe wie beispielsweise aus Soja, Milchproteine, Stärke oder Zucker eingesetzt werden. Geeignet als Verschlussmaterial ist auch thermoplastisch bioabbaubares Granulat, das Kaseinat oder Kasein, Plastifizierungsmittel wie Wasser, Glycerin, Sorbitol, Mannitol, Maltitol oder Ethylenglycol, und einen bioabbaubaren Polyester, beispielsweise Poly(butylenadipatcobutylenterephthalat) umfasst. Solch ein thermoplastisch bioabbaubares Granulat ist aus der WO 2012/010421 A1 bekannt. Grundsätzlich sind auch Polyvinylpyrrolidon, Polyalkylenoxid, Polyacrylat, Polyacrylatamide, Polyamid und Acrylmaleinsäurecopolymere möglich.

Ein Vorteil des Einsatzes von Folien als wasserlösliche Verschlussmaterialien ist, dass die Folie auf das flächige cellulosehaltige Fasermaterial, wie z.B. Papier im Wesentlichen gasdicht kaschiert werden kann. Die Verklebung kann beispielsweise mittels PVA-Lösung, anderen Lösungen von wasserlöslichen Polymeren oder üblichen Kaschierklebern oder Sprühklebern erfolgen, wie sie von der Firma Meyco als "Sprühkleber, kristallklar" angeboten werden. Auch ist eine Verklebung mit wasserlöslichen Kaschierklebern, wie Polyurethan-basierten Klebstoffen, möglich. Derartige Kleber werden beispielsweise als Zweikomponentenkleber BEST-PU0587 von der Firma Best Klebstoffe GmbH & Co. KG vertrieben.

Diese Verschlussmaterialfolie ist vorzugsweise zwischen 50 µm und 500 µm dick. Derartige Folien - beispielsweise aus PVA - sind unter der Bezeichnung M8310 mit einer Dicke von 88 µm bei der Firma Monosol, LLC erhältlich.

Auch ist eine Verklebung mit wasserlosen Kaschierklebern wie PU-basierten Klebstoffen grundsätzlich möglich, sofern dessen Konzentration weit unter 5% liegt.

Unter "im Wesentlichen gasdicht" wird im Rahmen der vorliegenden Erfindung verstanden, dass die Folien wenigstens so gasdicht sind, dass kurzzeitig Unterdruck oder Druckluft angelegt werden kann, um die Folien in die gewünschte dreidimensionale Form zu verformen. Vorzugsweise sind die Folien so dicht, dass sie eine Sperre für Wasserdampf oder Duftstoffe über einen gewissen Zeitraum bilden.

Insbesondere ist unter "im Wesentlichen gasdicht" im Rahmen der vorliegenden Erfindung zu verstehen, dass die Konzentration eines Duftstoffes in einem Reinigungsmittel, das mit einer Folie verpackt ist, nach 2 Wochen um höchstens 30% abgenommen hat, vorzugsweise nach 2 Wochen um höchstens 20% und besonders bevorzugt nach 6 Wochen um höchstens 20%.

Wird ein solches WC-Körbchen mit einer Hängevorrichtung, an der ein solches Behältnis mit Reinigungsmittel befestigt ist, wobei die Öffnungen in dem Behältnis mit einem gasdichten wasserlöslichen Material verschlossen sind, nun bei der Ingebrauchnahme nach dem Befestigen am Rand des Toilettenbeckens beim ersten Überspülen mittels Spülwasser überspült, so fließt Spülwasser über das wasserlösliche Material und löst dieses auf, so dass die Öffnungen zugänglich werden und Wasser in den Innenraum des Behältnisses gelangt und dort befindliches Reinigungsmittel nach und nach auflösen kann.

In einer Alternative werden die Öffnungen in dem flächigen cellulosehaltigen Fasermaterial mit einem im Wesentlichen gasdichten Etikett zugeklebt, so dass die Öffnungen gasdicht verschlossen sind. Ist das wiederentfernbare gasdichte Material ein nicht wasserlösliches Etikett, so kann dieses beispielsweise vor der Ingebrauchnahme des Körbchens einfach wieder von den Öffnungen abgezogen werden.

Das erfindungsgemäße Behältnis in der allgemeinen und in der bevorzugten Variante mit dem Verschlussmaterial, das mit einem eingegossenen oder auf sonstige Weise mit Reinigungsmittel befüllt ist, kann mit einem Behältnisdeckel verschlossen werden. Vorzugsweise ist der Behältnisdeckel ebenfalls aus flächigem cellulosehaltigen Fasermaterial und wird mit dem tiefgezogenen Behältnis vorzugsweise ebenfalls im Wesentlichen gasdicht verbunden, vorzugsweise durch Verkleben oder Einstecken bzw. Eindrücken, beispielsweise Eindrücken eines Formteils.

Behältnis und Behältnisdeckel können auch beide schalenförmige Hohlkörper sein.

Ein solches Behältnis mit Reinigungsmittel, das mit einem Deckel verschlossen ist, kann dann mit einer entsprechenden Hängevorrichtung, die zur Befestigung an dem Toilettenrand dient, verbunden, insbesondere eingeklipst, eingehängt oder verrastet werden. Das entleerte Behältnis aus flächigem cellulosehaltigen Fasermaterial einschließlich Deckel kann von der Hängevorrichtung entfernt und als Altpapier recycelt werden.

An die Hängevorrichtung kann dann ein neues mit Reinigungsmittel befülltes Behältnis befestigt werden.

Das Behältnis mit dem Reinigungsmittel und/oder der Behältnisdeckel weisen vorzugsweise Mittel auf, um die Hängevorrichtung lösbar zu befestigen. In einer ersten kostengünstigen Variante wird das Behältnis mittels entsprechender an dem Deckel vorgesehener Schlitze einfach in Haken, die an der Hängevorrichtung vorgesehen sind, eingehängt. Nach der Entleerung wird das Behältnis von dem Haken an der Hängevorrichtung genommen und kann durch ein neues Behältnis aus flächigem cellulosehaltigen Fasermaterial mit Reinigungsmittel ersetzt werden.

Auch andere Befestigungsarten zur Befestigung des Behältnisses an der Hängevorrichtung wie Druckknöpfe, Karabiner, Klettverschlüsse oder Magnetverschlüsse sind möglich.

Falls gewünscht, kann auch der Behältnisdeckel wie das Behältnis aus flächigem cellulosehaltigen Fasermaterial mit der Stanzung von Öffnungen für den Wasserdurchtritt, anschließendem Kaschieren oder Verschließen der Öffnungen mit einem vorzugsweise wasserlöslichen Verschlussmaterial und ggfs. anschließenden Verformen hergestellt werden.

Ein solches Behältnis mit Behältnisdeckel und freispülbaren Öffnungen auf beiden Seiten ermöglicht einen sehr guten Eintritt des Spülwassers von beiden Seiten und somit eine gute Auflösung des Reinigungsmittels.

Auch kann das Behältnis zwei tiefgezogene Behältnishalbschalen mit Stanzungen, deren Öffnungen mit dem gasdichten und wiederentfernbaren Verschlussmaterial verschlossen sind, umfassen, wobei die beiden Behältnisschalen miteinander, zum Beispiel durch Stege, verbunden sein können.

Ein weiterer Vorteil der erfindungsgemäßen Behältnisse ist, dass die Papierbehältnisse bedruckbar sind. So kann beispielsweise ein bedrucktes und ausgestanztes flächiges cellulosehaltiges Fasermaterial, dessen Öffnungen ggf. mit einem Verschlussmaterial verschlossen sind, tiefgezogen werden.

In einer bevorzugten Variante ist das Behältnis wannenförmig und weist einen umlaufenden, senkrecht zu den Wannenwänden verlaufenden ebenen Rand auf, der zur Befestigung, insbesondere Verklebung oder Verschweißen, mit dem Deckel dient. An dem Deckel können Öffnungen zur Befestigung an der Hängevorrichtung und/oder Öffnungen zum Durchtritt des Spülwassers vorgesehen sein.

Die Hängevorrichtung kann mittels Spritzguss, vorzugsweise aus biologisch abbaubaren Polymeren, hergestellt sein. Sie weist zum Beispiel einen Haken oder Klebemittel zur Befestigung am Toilettenrand auf und Mittel zur Befestigung des Behältnisses. Grundsätzlich können an einer Hängevorrichtung auch mehrere Behältnisse befestigt werden.

In einer weiteren Variante ist der Behältnisdeckel ein Teil der Hängevorrichtung und an dieser im unteren Bereich angeformt. Das Behältnis mit dem Reinigungsmittel kann dann beispielsweise auf den sich an der Hängevorrichtung befindlichen Deckel aufgeklipst oder aufgeschoben und nach der Entleerung wieder entfernt werden. Diese Variante bringt allerdings den Nachteil mit sich, dass der Verbraucher beim Befüllen das in die Toilettenschüssel hineinragende Ende der Hängevorrichtung mit dem Deckel berühren muss.

Grundsätzlich können auch Deckel und Körbchen aus einem Bogen hergestellt werden, entweder gemeinsam tiefgezogen oder nur das Körbchen tiefgezogen werden und dann zusammengefaltet und an den drei anderen Seiten verbunden werden.

Ein weiterer wesentlicher Vorteil dieser bevorzugten Variante besteht darin, dass das aus dem gestanzten tiefziehbaren flächigen cellulosehaltigen Fasermaterial mit dem gasdichten Verschlussmaterial geformte Behältnis, das mit einem Deckel verschlossen ist, ebenfalls im Wesentlichen gasdicht ist, so dass flüchtige Verbindungen wie zum Beispiel Duftstoffe in einem in dem Behältnis mit Deckel befindlichen Reinigungsmittel nicht verdampfen können.

Damit erfüllt das mit dem gasdichten Verschlussmaterial verschlossene Behältnis mit Deckel die Anforderungen an eine im Wesentlichen gasdichte Verpackung, d.h. das mit dem gasdichten Verschlussmaterial verschlossene Behältnis mit Deckel kann ohne weitere Blisterverpackung in einer üblichen nicht gasdichten Verpackung wie einer Kartonage angeboten werden und die übliche Blisterfolie und die damit verbundenen Kosten können somit entfallen. Auch das "Einpacken" des Reinigungsmittels in eine wasserlösliche Folie, das dazu dient, ein Entweichen der Duftstoffe und ein Verschmutzen der Hände bei der Handhabung zu vermeiden, ist nicht erforderlich. All dies sind weitere Aspekte der Umweltfreundlichkeit des erfindungsgemäßen Behältnisses in der bevorzugten Variante.

Ein weiterer Vorteil dieser bevorzugten Variante besteht darin, dass die in dem erfindungsgemäßen Behältnis verpackten Reinigungsmittel nicht nur gasdicht, sondern gleichzeitig auch kindersicher sind.

Nach dem erfindungsgemäßen Verfahren lassen sich kostengünstig und auf einfache Weise Behältnisse für nahezu jede Reinigungsmittelform herstellen.

Die vorliegende Erfindung wird nun anhand von Ausführungsbeispielen näher beschrieben.

Es zeigen:
- Figur 1:: die Ansicht auf die Außenseite des erfindungsgemäßen Behältnisses in der bevorzugten Variante,
- Figur 2:: die Draufsicht auf die Innenseite des Behältnisses aus Figur 1,
- Figur 3a und 3b:: zwei Varianten des Behältnisdeckels,
- Figur 4:: das Behältnis aus Figur 1 bis 3 an einer Hängevorrichtung in einer Toilettenschüssel,
- Figur 5:: eine schematische Darstellung des erfindungsgemäßen Verfahrens mit den Schritten a) bis i) und
- Figur 6: eine schematische Darstellung der Schichtabfolge des Folienquerschnitts des Behältnisses.

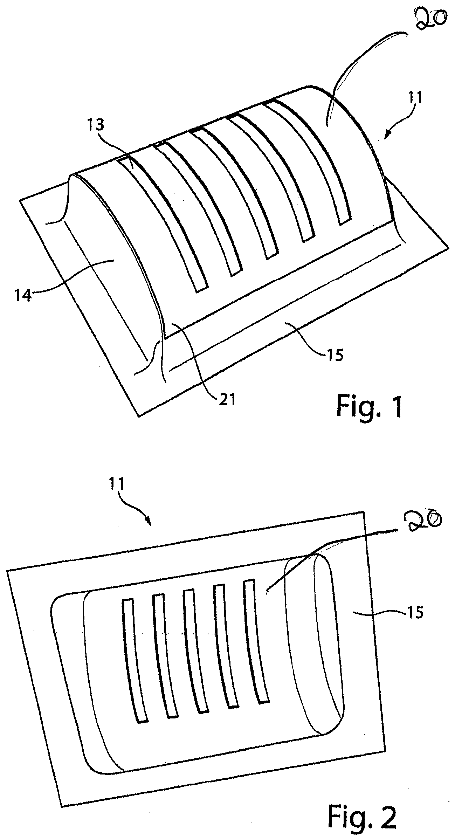

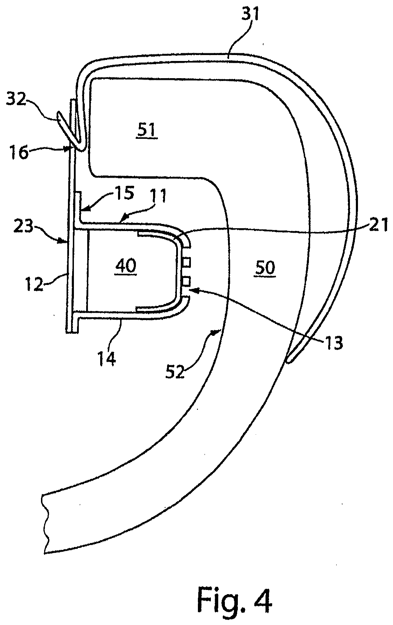

Figur 1 und 2 zeigen ein Behältnis 11 aus Papier 20, das eine halbzylinderförmige Schale 14 mit einem umlaufenden Rand 15 aufweist. Die halbzylinderförmige Schale 14 dient zur Aufnahme des Reinigungsmittels 40. Figur 1 zeigt die Ansicht auf die Außenseite des Behältnisses 11, somit die Ansicht auf die Seite, die, wenn das Behältnis 11 in der Toilettenschüssel 50 eingehängt ist, in Richtung der Toilettenschüsselwand 52 weist, vgl. Figur 4. Figur 2 zeigt die Draufsicht auf die Innenseite des offenen Behältnisses 11.

In der Schale 14 sind fünf längliche Öffnungen 13 vorgesehen, die in der bevorzugten Variante mit einem Folienstück als Verschlussmaterial 21 gasdicht verschlossen sind. Grundsätzlich ist erfindungsgemäß jedoch ein Verschlussmaterial 21 in den Öffnungen 13 nicht erforderlich. Das Folienstück 21 ist in einer ersten Ausführungsform eine wasserlösliche Folie, die auf die Öffnungen 13 des Behältnisses 11 aufgeklebt ist, und zwar gemäß Figur 2 auf der Innenseite des Behältnisses.

Das Folienstück 21 wurde vor dem Tiefziehprozess auf die in das Papier 20 ausgestanzten Öffnungen 13 des Behälters 11 aus Papier aufgeklebt, wie weiter unten beschrieben.

Diese wasserlösliche Folie 21 kann bei der ersten Ingebrauchnahme durch das Überspülen mit Wasser entfernt werden und damit die Öffnungen 13, durch die das Wasser an die Oberfläche des Reinigungsmittels 40 gelangen kann, freigespült werden.

Selbstverständlich kann die Schale 14 auch eine andere Form aufweisen, solange sich diese mittels Tiefziehen, Kaltverformung, Kaltverpressung oder Hydroforming herstellen lässt. Auch die Anzahl, Form und Anordnung der Öffnungen 13 kann selbstverständlich variieren. Durch die Größe und Anzahl der Öffnungen 13 kann das Abspülverhalten und die Spülzahl des Reinigungsmittels 40 verändert werden.

Am oberen Ende der nach oben offenen Schale 14 erstreckt sich ein nach außen umlaufender ebener Rand 15, vgl. Figur 2. Der Rand 15 dient dazu, das Behältnis 11 nach der Befüllung mit dem Reinigungsmittel 40 mit dem Behältnisdeckel 12 vorzugsweise gasdicht zu verschließen. Hierbei können geeignete und übliche Verschlussverfahren wie Heißsiegeln, Ultraschallsiegeln oder auch Verkleben mit einem Klebstoff wie zum Beispiel Polyvinylalkohollösung zum Einsatz kommen. Die Breite des Rands 15 beträgt vorzugsweise zwischen 2 mm und 10 mm.

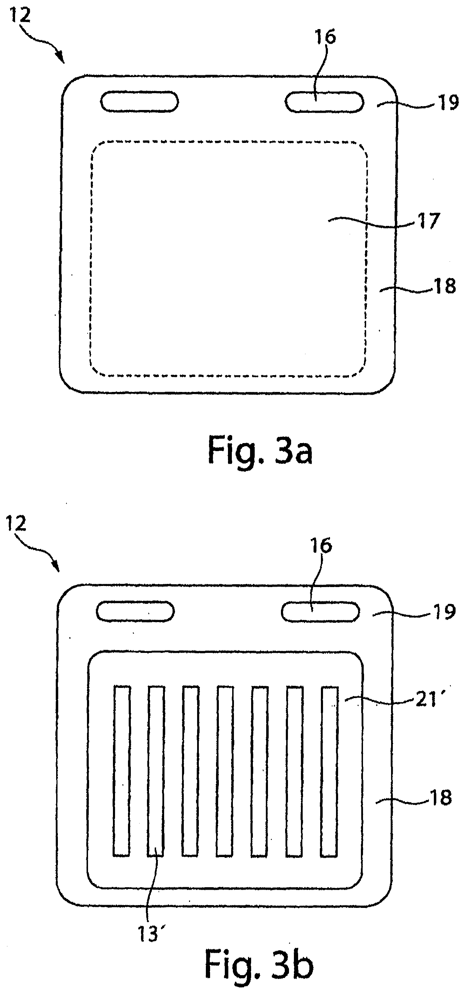

In Figur 3 sind zwei Varianten der Behältnisdeckel 12 dargestellt. Figur 3a zeigt einen einfachen Behältnisdeckel 12 aus Papier, der in seinem gestrichelten Bereich 17 mit dem Rand 15 des Behältnisses 11 verbunden wird. Für ein ansprechendes Aussehen kann die Sichtseite 23 des Behältnisdeckels 12, die sich auf der dem Betrachter zugewandten Seite in Figur 3 befindet und im Gebrauchszustand (Figur 4) für den Verbraucher sichtbar ist, dekorativ gestaltet sein.

Oberhalb des Abdeckbereichs 17 ist ein Abschnitt 19 mit länglichen Befestigungsschlitzen 16 vorgesehen. Durch diese Befestigungsschlitze 16 können die an der Hängevorrichtung 31 vorgesehenen Befestigungshaken 32 gesteckt werden, so dass das mit dem Reinigungsmittel 40 gefüllte Behältnis 11 mit Behältnisdeckel 12 an der Hängevorrichtung 31 als WC-Körbchen 30 am Rand der Toilettenschüssel 50 befestigt werden kann, vgl. Figur 4.

In der zweiten Deckelvariante in Figur 3b weist der Behältnisdeckel 12 ebenfalls eingestanzte Öffnungen 13' auf, die entsprechend dem zuvor beschriebenen Behältnis 11 ebenfalls mit einer wasserlöslichen Folie 21' verschlossen sein können. Der Behältnisdeckel 12 ist vorzugsweise eben, er kann jedoch auch entsprechend dem Behältnis 11 durch Stanzen aus Papier, Verschließen der Öffnungen 13 und anschließendem Tiefziehen dreidimensional geformt sein. Entsprechend dem zuvor beschriebenen Behältnis 11 wird auch diese wasserlösliche Folie 21' beim ersten Überspülen abgespült.

Das Behältnis 11 mit Öffnungen 13, das von dem Behältnisdeckel 12 mit Öffnungen 13' abgedeckt wird, ermöglicht nach dem Freispülen des Verschlussmaterials 21 bzw. 21' im Spülwasserstrom somit einen Eintritt des Spülwassers zum Reinigungsmittel 40 sowohl durch die Schale 14 aus Papier, als auch durch den Behältnisdeckel 12 aus Papier.

Das Behältnis 11 und der Behältnisdeckel 12 stellen vorzugsweise einen einzigen Hohlraum zur Bevorratung des Reinigungsmittels 40 bereit, und das Behältnis 11 und/oder der Behältnisdeckel 12 weisen mehrere Öffnungen 13 zum direkten Eintritt und Austritt des Spülwassers auf. Somit kann durch die Öffnungen 13 ein einfacher direkter Eintritt des Spülwassers in das WC-Körbchen erfolgen und ein geringer Teil des in dem Hohlkörper befindlichen Reinigungsmittels aufgelöst werden und die Lösung aus den Öffnungen 13 in die Toilettenschüssel gespült werden.

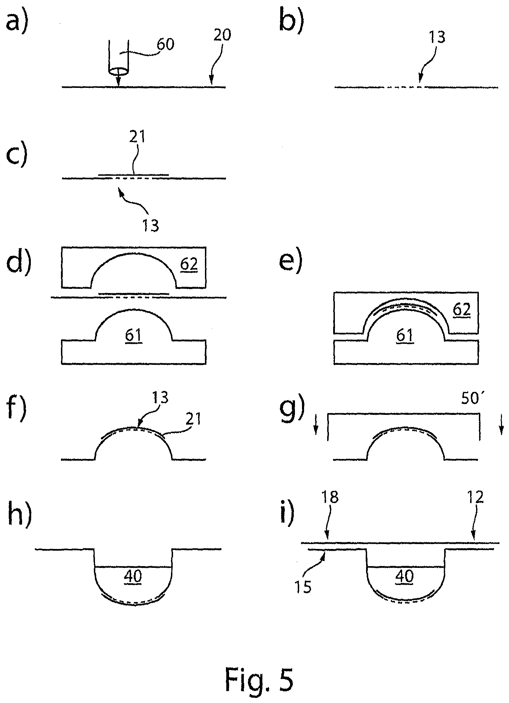

Das erfindungsgemäße Verfahren ist schematisch in den Figuren 5a bis 5i dargestellt.

In ein ebenes Blatt Papier 20 werden in einer Fläche von ca. 40 x 60 mm fünf längliche Öffnungen 13 mit einer Stanze 60 gestanzt, vgl. Figur 5a, b. Über die Öffnungen 13 wird nun eine wasserlösliche PVA-Folie als gasdichtes Verschlussmaterial 21 mit Polyvinylalkohollösung als Klebstoff geklebt, vgl. Figur 5c, so dass die Öffnungen 13 gasdicht verschlossen sind.

Die PVA-Folie 21, die auch von einer Rolle abgewickelt werden kann, wird auch vollflächig auf das Papier 20 mit den gestanzten Öffnungen 13 kaschiert und ggf. abgeschnitten, so dass ein Verbund bzw. Laminat erhalten wird.

Wesentlich beim Verfahrensschritt in Figur 5c ist, dass der Verbund aus Papier 20 mit den Öffnungen 13 und dem Verschlussmaterial 21 gasdicht ist.

Anschließend wird der Verbund aus Papier 20 und Verschlussmaterial 21 in einer Tiefziehstation ein- oder beidseitig erwärmt. Der Vorstrecker 61 und das Tiefziehformwerkzeug 62 fahren dann durch die Papierebene hindurch und geben die fertige Kontur schon grob vor, vgl. Figur 5d, e. Dann kommt Druckluft von der einen und Vakuum von der anderen Seite, um das Papier rasch und stark an die wassergekühlte Wandung (Kontur) des Formwerkzeuges zu bringen (nicht dargestellt). Durch kleine Löcher oder Schlitze entweicht die Luft zwischen dem Papierverbund 20, 21 und dem Werkzeug. Der erkaltete, nun feste Papierverbund 20, 21 wird von dem Formwerkzeug getrennt und im nächsten Arbeitstakt der Ausstanzstation 60' zugeführt, vgl. Figur 5f, g.

Das hohlkörperförmige Behältnis 11 mit den Öffnungen 13 und der kaschierten wasserlöslichen Folie 21 wird nun mit der heißen Reinigungsmittelmasse 40 befüllt und erkalten gelassen (Figur 5h). Anstatt heißer, geschmolzener Reinigungsmittelmasse kann ebenso ein fester, beispielsweise extrudierter oder tablettierter Reinigungsmittelformkörper in die Kavität eingelegt werden.

Anschließend wird das Behältnis 11 mit einem Behältnisdeckel 12, der auf den Rand 15 des Behältnisses 11 gesiegelt oder aufgeklebt wird, gasdicht verschlossen, Fig. 5i.

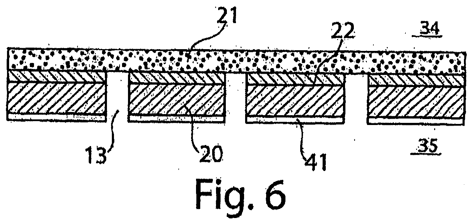

Figur 6 zeigt schematisch die Schichtabfolge des Verbundmaterials des Behältnisses 11.

Der Verbund besteht aus einer PVA-Folie 21, welche sich bei Wasserkontakt auflöst, und einem Papier 20 mit gestanzten Öffnungen 13. Grundsätzlich kann die PVA-Folie 21 sowohl auf der Innenseite des Behältnishohlkörpers aufgebracht sein, als auch auf der Außenseite des Behältnishohlkörpers.

Die PVA-Folie 21 ist mit dem gestanzten Papier 20 mit einem Kaschierkleber 22 verklebt. Nach dem erstmaligen Überspülen mit Wasser werden die Öffnungen 13 durchlässig, da die PVA-Folie 21 sich auflöst, so dass Wasser vom Außenraum 34 in den Innenraum 35 des Behältnisses 11 gelangen kann und das dort befindliche Reinigungsmittel 40 auflöst.

Die Geometrie und Lage der Öffnungen 13 ist so gewählt, dass diese nicht beziehungsweise möglichst wenig durch den Umformvorgang beim Tiefziehen beeinflusst beziehungsweise verändert werden.

Das Verschlussmaterial 21 ist mittels eines elastischen Kaschierklebers 22, der für das Tiefziehen geeignet ist, mit der perforierten Papierschicht 20 verbunden. Der Kaschierkleber 22 wird auf das Papier 20 aufgetragen, um das Auflöseverhalten der PVA-Folie 21 im Bereich der Öffnungen 13 nicht zu beeinflussen. Der Kaschierkleber 22 kann auf Polyurethan basieren und ein chemisch härtender 2-Komponenten-PU-Klebstoff sein.

Optional kann eine Siegelschicht 41 auf einer Seite der Papiere 20 aufgebracht sein, um ein leichteres Verbinden zwischen dem Rand 15 der Schale 14 und dem Behältnisdeckel 12 mit einem gängigen Heißsiegelverfahren zu ermöglichen. Beispielsweise kann diese Schicht 41 aus Polyethylen oder Polypropylen bestehen.

## Patentansprüche

1. Verfahren zur Herstellung eines Behältnisses (11) mit wenigstens einer Öffnung (13) zur Bevorratung von Reinigungsmitteln (40) für ein WC-Körbchen (30) zur Befestigung am Rand einer Toilette, wobei ein flächiges cellulosehaltiges Fasermaterial (20) bereitgestellt wird und in das flächige cellulosehaltige Fasermaterial (20) wenigstens eine Öffnung (13) gestanzt wird und das flächige cellulosehaltige Fasermaterial (20) anschließend mittels Tiefziehen, Kaltverformung, Kaltverpressung oder Hydroforming dreidimensional verformt wird.

2. Verfahren nach Anspruch 1, **dadurch gekennzeichnet, dass** das flächige cellulosehaltige Fasermaterial aus Papier oder Pappe ist.

3. Verfahren nach Anspruch 1 oder 2, **dadurch gekennzeichnet, dass** die flächigen cellulosehaltigen Fasermaterialien (20) tiefzieh-, kaltverform-, kaltpress- oder hydroformbar sind und/oder dem Altpapierbehälter zugegeben werden können und vorzugsweise ohne Kunststofffasern und/oder zu wenigstens 95%, bevorzugt zu 98% und besonders bevorzugt zu 100% recycelbar sind und/oder wenigstens teilweise aus recycelten flächigen cellulosehaltigen Fasermaterialien, insbesondere Papier oder Pappe, hergestellt sind und/oder dass die Cellulose in dem flächigen cellulosehaltigen Fasermaterial mit thermoplastischen Eigenschaften ausgestattet ist.

4. Verfahren nach einem der vorangegangenen Ansprüche, **dadurch gekennzeichnet, dass** das hergestellte Behältnis (11) anschließend mit einem WC-Reinigungsmittel (40) befüllt wird.

5. Verfahren nach einem der vorangegangenen Ansprüche, **dadurch gekennzeichnet, dass** die wenigstens eine Öffnung (13) vor dem Tiefziehen, Kaltverformen, Kaltverpressen oder Hydroforming mit einem im Wesentlichen gasdichten und wiederentfernbaren Verschlussmaterial (21) verschlossen wird.

6. Verfahren nach Anspruch 5, **dadurch gekennzeichnet, dass** das im Wesentlichen gasdichte und wiederentfernbare Verschlussmaterial (21) ein wasserlösliches Material, ein selbstklebendes Etikett oder eine Aufreißlasche ist.

7. Verfahren nach Anspruch 5 oder 6, **dadurch gekennzeichnet, dass** das wasserlösliche Verschlussmaterial (21) aus der aus Polyvinylalkohol, Polyvinylpyrrolidon, Polyalkylenoxid, Polyacrylat, Polyacrylatamid, Polyamid, Acrylmaleinsäurecopolymer, Polysaccharid, Gelatine, Cellulosederivat, insbesondere Hydroxyethyl-, Methy- und Propylcellulose, Maltodextrin oder thermoplastischen bioabbaubaren Granulaten oder nachwachsenden Rohstoffen bestehenden Gruppe ausgewählt wird und insbesondere eine wasserlösliche Folie ist und/oder die wasserlösliche Folie zwischen 50 Mikrometer und 500 Mikrometer dick ist.

8. Verfahren nach Anspruch 6 oder 7, **dadurch gekennzeichnet, dass** das wasserlösliche Verschlussmaterial (21) auf der Innen- oder Außenseite des Behältnisses aufgebracht ist.

9. Verfahren nach einem der Ansprüche 5, 6, 7 oder 8, **dadurch gekennzeichnet, dass** das Verschlussmaterial (21) eine Folie ist und auf das flächige cellulosehaltige Fasermaterial (20) mit den Öffnungen (13) kaschiert wird.

10. WC-Körbchen umfassend ein Behältnis (11) mit Öffnungen (13), hergestellt nach einem der Ansprüche 1 bis 9, **dadurch gekennzeichnet, dass** das Behältnis (11) wenigstens ein Mittel (40) zur Reinigung von Toiletten umfasst, wobei das Mittel (40) vorzugsweise in das Behältnis (11) eingegossen oder eingelegt ist.

11. WC-Körbchen umfassend ein Behältnis (11) mit Reinigungsmittel (40) nach Anspruch 10, **dadurch gekennzeichnet, dass** das Behältnis (11) mit einem Behältnisdeckel (12) vorzugsweise gasdicht verschlossen ist oder das Behältnis ein Behältnishalbkörper (11') ist, der mit einem weiteren Behältnishalbkörper (12') vorzugsweise gasdicht verschlossen ist.

12. WC-Körbchen umfassend ein Behältnis nach Anspruch 10 oder 11, **dadurch gekennzeichnet, dass** das Behältnis (11) und/oder der Behältnisdeckel (12) und/oder der Behältnishalbkörper (11', 12') Mittel (16) zur lösbaren Befestigung an einer Hängevorrichtung (31) aufweisen.

13. WC-Körbchen umfassend ein Behältnis (11) mit Reinigungsmitteln (40) nach einem der Ansprüche 10 bis 12, wobei die Behältnis-Öffnungen (13) mit einem gasdichten und wiederentfernbaren und vorzugsweise wasserlöslichem Verschlussmaterial (21) gemäß Anspruch 6 verschlossen sind, **dadurch gekennzeichnet, dass** das WC-Körbchen mit dem Behältnis (11, 11', 12, 12') mit dem Reinigungsmittel (40) in einer nicht gasdichten Verpackung, insbesondere einem Karton, verpackt ist.

14. WC-Körbchen umfassend ein Behältnis (11) mit Reinigungsmittel (40) nach einem der Ansprüche 10 bis 13, wobei die Behältnis-Öffnungen (13) mit einem gasdichten, wiederentfernbaren und wasserlöslichem Verschlussmaterial (21) gemäß Anspruch 6 verschlossen sind, **dadurch gekennzeichnet, dass** das Verschlussmaterial (21) beim ersten Überspülen des am Toilettenrand befestigten WC-Körbchen mit Wasser auflösbar ist.

15. Verwendung eines WC-Körbchens umfassend ein Behältnis (11) mit Reinigungsmitteln (40) nach einem der Ansprüche 10 bis 14 zur Befestigung am Rand der Toilette zur Unterhaltsreinigung, wobei insbesondere das WC-Körbchen bei jedem Spülvorgang von dem Spülwasser überströmt und dadurch bei jedem Spülvorgang ein geringer Anteil des Reinigungsmittels freigesetzt wird.

## Claims

1. Method for manufacturing a container (11) with at least one opening (13) for storing cleaning agents (40) for a toilet basket (30) to be attached to the rim of a toilet, wherein a flat cellulose-containing fiber material (20) is provided and at least one opening (13) is punched into the flat cellulose-containing fiber material (20) and the flat cellulose-containing fiber material (20) is then formed into a three-dimensional shape by deep drawing, cold forming, cold pressing, or hydroforming.

2. Method according to claim 1, **characterized in that** the flat cellulose-containing fiber material is made of paper or cardboard.

3. Method according to claim 1 or 2, **characterized in that** the flat cellulose-containing fiber materials (20) are deep-drawable, cold-formable, cold-pressable or hydroformable and/or can be added to the waste paper container and are preferably without plastic fibers and/or at least 95%, preferably 98% and particularly preferably 100% recyclable and/or are at least partially made from recycled flat cellulose-containing fiber materials, in particular paper or cardboard, and/or that the cellulose in the flat cellulose-containing fiber material is provided with thermoplastic properties.

4. Method according to one of the preceding claims, **characterized in that** the manufactured container (11) is then filled with a toilet cleaning agent (40).

5. Method according to one of the preceding claims, **characterized in that** the at least one opening (13) is closed with a substantially gas-tight and removable closure material (21) prior to deep drawing, cold forming, cold pressing or hydroforming.

6. Method according to claim 5, **characterized in that** the essentially gas-tight and removable sealing material (21) is a water-soluble material, a self-adhesive label or a tear-off tab.

7. Method according to claim 5 or 6, **characterized in that** the water-soluble sealing material (21) is selected from the group consisting of polyvinyl alcohol, polyvinylpyrrolidone, polyalkylene oxide, polyacrylate, polyacrylateamide, polyamide, acrylic maleic acid copolymer, polysaccharide, gelatin, cellulose derivatives, in particular hydroxyethyl, methyl and propyl cellulose, maltodextrin or thermoplastic biodegradable granulates or renewable raw materials, and in particular is a water-soluble film and/or the water-soluble film is between 50 micrometers and 500 micrometers thick.

8. Method according to claim 6 or 7, **characterized in that** the water-soluble closure material (21) is applied to the inside or outside of the container.

9. Method according to one of claims 5, 6, 7 or 8, **characterised in that** the sealing material (21) is a film and is laminated onto the flat cellulose-containing fibre material (20) with the openings (13).

10. Toilet basket comprising a container (11) with openings (13), manufactured according to one of claims 1 to 9, **characterized in that** the container (11) comprises at least one means (40) for cleaning toilets, wherein the means (40) is preferably molded into or inserted into the container (11).

11. Toilet basket comprising a container (11) with cleaning agent (40) according to claim 10, **characterized in that** the container (11) is preferably closed in a gas-tight manner with a container lid (12) or the container is a container half-body (11'), which is closed in a preferably gas-tight manner with a further container half-body (12').

12. Toilet basket comprising a container according to claim 10 or 11, **characterized in that** the container (11) and/or the container lid (12) and/or the container half-body (11', 12') have means (16) for detachable attachment to a hanging device (31).

13. Toilet basket comprising a container (11) with cleaning agents (40) according to one of claims 10 to 12, wherein the container openings (13) are closed with a gas-tight and removable and preferably water-soluble closure material (21) according to claim 6, **characterized in that** the toilet basket with the container (11, 11', 12, 12') with the cleaning agent (40) is packaged in a non-gas-tight packaging, in particular a cardboard box.

14. Toilet basket comprising a container (11) with cleaning agent (40) according to one of claims 10 to 13, wherein the container openings (13) are closed with a gas-tight, removable and water-soluble sealing material (21) according to claim 6, **characterized in that** the closure material (21) is soluble when the toilet basket attached to the toilet rim is first flushed with water.

15. Use of a toilet basket comprising a container (11) with cleaning agents (40) according to one of claims 10 to 14 for attachment to the rim of the toilet for maintenance cleaning, whereby the toilet basket particulary is flooded by the flush water during each flushing operation, thereby releasing a small amount of the cleaning agent during each flushing operation.

## Revendications

1. Procédé de fabrication d'un récipient (11) avec au moins une ouverture (13) pour le stockage de produits de nettoyage (40) pour un panier de WC (30) destiné à être fixé sur le rebord d'une cuvette de WC, dans lequel on fournit un matériau fibreux plat contenant de la cellulose (20) et on découpe au moins une ouverture (13) dans le matériau fibreux plat contenant de la cellulose (20), puis on déforme le matériau fibreux plat contenant de la cellulose (20) en trois dimensions par emboutissage profond, formage à froid, pressage à froid ou hydroformage.

2. Procédé selon la revendication 1, **caractérisé en ce que** le matériau fibreux plat contenant de la cellulose est constitué de papier ou de carton.

3. Procédé selon la revendication 1 ou 2, **caractérisé en ce que** les matériaux fibreux cellulosiques plats (20) sont emboutissables, déformables à froid, pressables à froid ou hydroformables et/ou peuvent être ajoutés au conteneur de vieux papiers et sont de préférence exempts de fibres plastiques et/ou recyclables à au moins 95 %, de préférence à 98 % et de manière particulièrement préférée à 100 %, et/ou sont fabriqués au moins en partie à partir de matériaux fibreux cellulosiques plats recyclés, en particulier du papier ou du carton, et/ou **en ce que** la cellulose dans le matériau fibreux cellulosique plat est dotée de propriétés thermoplastiques.

4. Procédé selon l'une des revendications précédentes, **caractérisé en ce que** le récipient (11) fabriqué est ensuite rempli d'un produit nettoyant pour WC (40).

5. Procédé selon l'une des revendications précédentes, **caractérisé en ce que** la au moins une ouverture (13) est fermée avant l'emboutissage, le formage à froid, le pressage à froid ou l'hydroformage à l'aide d'un matériau de fermeture (21) essentiellement étanche aux gaz et amovible.

6. Procédé selon la revendication 5, **caractérisé en ce que** le matériau de fermeture (21) essentiellement étanche aux gaz et amovible est un matériau soluble dans l'eau, une étiquette autocollante ou une languette à déchirer.

7. Procédé selon la revendication 5 ou 6, **caractérisé en ce que** le matériau de fermeture hydrosoluble (21) est choisi dans le groupe constitué par le polyvinylalcool, le polyvinylpyrrolidone, le polyalkylèneoxyde, le polyacrylate, le polyacrylateamide, le polyamide, le copolymère d'acide acrylique et d'acide maléique, le polysaccharide, la gélatine, un dérivé de cellulose, en particulier l'hydroxyéthylcellulose, la méthylcellulose et la propylcellulose, la maltodextrine ou des granulés thermoplastiques biodégradables ou des matières premières renouvelables, et est en particulier un film soluble dans l'eau et/ou le film soluble dans l'eau a une épaisseur comprise entre 50 micromètres et 500 micromètres.

8. Procédé selon la revendication 6 ou 7, **caractérisé en ce que** le matériau de fermeture hydrosoluble (21) est appliqué sur la face intérieure ou extérieure du récipient.

9. Procédé selon l'une des revendications 5, 6, 7 ou 8, **caractérisé en ce que** le matériau de fermeture (21) est un film et est laminé sur le matériau fibreux plat contenant de la cellulose (20) avec les ouvertures (13).

10. Panier pour WC comprenant un récipient (11) avec des ouvertures (13), fabriqué selon l'une des revendications 1 à 9, **caractérisé en ce que** le récipient (11) comprend au moins un moyen (40) pour nettoyer les toilettes, le moyen (40) étant de préférence moulé ou inséré dans le récipient (11).

11. Panier pour WC comprenant un récipient (11) avec un produit nettoyant (40) selon la revendication 10, **caractérisé en ce que** le récipient (11) est fermé de préférence de manière étanche aux gaz par un couvercle (12) ou **en ce que** le récipient est une demi-coque (11') qui est fermé de préférence de manière étanche aux gaz par une autre demi-coque de récipient (12').

12. Panier pour WC comprenant un récipient selon la revendication 10 ou 11, **caractérisé en ce que** le récipient (11) et/ou le couvercle de récipient (12) et/ou la demi-coque de récipient (11', 12') des moyens (16) pour être fixés de manière amovible à un dispositif de suspension (31).

13. Panier pour WC comprenant un récipient (11) avec des produits de nettoyage (40) selon l'une des revendications 10 à 12, les ouvertures du récipient (13) étant fermées par un matériau de fermeture (21) étanche aux gaz, amovible et de préférence soluble dans l'eau selon la revendication 6, **caractérisé en ce que** le panier pour WC avec le récipient (11, 11', 12, 12') contenant le produit nettoyant (40) est emballé dans un emballage non étanche aux gaz, en particulier un carton.

14. Panier pour WC comprenant un récipient (11) avec un produit nettoyant (40) selon l'une des revendications 10 à 13, les ouvertures du récipient (13) étant fermées par un matériau de fermeture (21) étanche au gaz, amovible et soluble dans l'eau selon la revendication 6, **caractérisé en ce que** que le matériau de fermeture (21) est soluble dans l'eau lors du premier rinçage du panier pour WC fixé au rebord des toilettes.

15. Utilisation d'un panier pour WC comprenant un récipient (11) contenant des produits nettoyants (40) selon l'une des revendications 10 à 14, destiné à être fixé au rebord des toilettes pour le nettoyage d'entretien, le panier WC en particulier est recouvert par l'eau de rinçage à chaque rinçage, ce qui permet de libérer une petite quantite de produit nettoyant à chaque rinçage.
